# EUROPÄISCHE PATENTSCHRIFT

(11) **EP 2 189 399 B1**
(45) Veröffentlichungstag und Bekanntmachung des Hinweises auf die Patenterteilung: **07.03.2012**
(21) Anmeldenummer: 09014398.3
(22) Anmeldetag: 18.11.2009
(51) Int. Cl.: B65G 35/06, B23Q 7/14

(54) **Förderer mit einer Kurve**
Conveyer with a curve
Transporteur doté d'une courbe

(30) Priorität: 21.11.2008 DE 102008058403
(43) Veröffentlichungstag der Anmeldung: 26.05.2010
(73) Patentinhaber: Robert Bosch GmbH, 70469 Stuttgart (DE)
(72) Erfinder: Willi, Marco, 71726 Benningen am Neckar (DE)
(74) Vertreter: Maiß, Harald

(56) Entgegenhaltungen:
- EP-A1- 1 157 780
- DE-U1-202005 009 213

## Beschreibung

Die Erfindung betrifft einen Förderer gemäß dem Oberbegriff von Anspruch 1 und einen Werkstückträger für einen derartigen Förderer.

Aus der DE 40 36 214 C2 ist ein Förderer bekannt. Gemäß der Fig. 1 der DE 40 36 214 C2 umfasst der Förderer einen Werkstückträger 4, der mit Antriebsmitteln in Form von Förderrollen 3 oder Förderbändern reibschlüssig mitgenommen wird, wobei die Antriebsmittel eine Förderebene definieren. Weiter sind eine Innenführung und eine Außenführung vorgesehen, die den Werkstückträger seitlich gleitend führen und somit eine Förderbahn für diesen definieren, wobei die Förderbahn eine Kurve beschreibt. Die Außenrührung wird von einem ersten und einem zweiten geraden Außenführungsabschnitt 5, die senkrecht zueinander angeordnet sind gebildet, wobei diese durch einen konkav gebogenen Außenführungsabschnitt 7 so miteinander verbunden sind, dass der Werkstückträger unterbrechungsfrei geführt wird. Der gebogene Außenführungsabschnitt wird dabei von einem gesonderten Leitstück 7 gebildet, das an den geraden Außenführungsabschnitten befestigt ist.

Die Innenführung ist mit einer vorgegebenen Bahnbreite äquidistant zur Außenfuhrung angeordnet, so dass sich ein erster und ein zweiter gerader Innenführungsabschnitt 5 ergeben, die über einen gebogenen Innenführmgsabschnitt 6a miteinander verbunden sind. Der kreisförmig gebogene Innenführungsabschnitt ist tangential zu den geraden Innenführungsabschnitten angeordnet, so dass sich auch an der Innenführung eine unterbrechungsfreie Führung des Werkstückträgers ergibt. Die Bahnbreite ist minimal größer als die Breite des Werkstückträgers gewählt, so dass dieser spiel- und zugleich reibungsarm gleitend geführt ist.

Die Antriebsmittel bzw. deren Antriebskraft verläuft jeweils nur parallel zu den geraden Abschnitten der Förderstrecke, so dass sie sich im Bereich der Kurve nicht parallel zur Förderrichtung erstrecken. Hierdurch ergibt sich das Problem, dass die Antriebskraft in der Kurve unter einem ungünstigen Winkel am Werkstückträger angreift, wobei gleichzeitig der Fahrwiderstand in der Kurve gegenüber der Geradeausfahrt des Werkstückträgers erhöht ist. Um die plattenartigen Werkstückträger möglichst zuverlässig um die Kurve zu fördern, hat man deren Seitenbegrenzung in Form eines Langrunds ausgeführt. Aufgrund der reibschlüssigen Mitnahme zwischen Antriebsmittel und Förderer kann es aber dennoch dazu kommen, dass der Werkstückträger in der Kurve stecken bleibt. Dieses Steckenbleiben stellt ein erhebliches Problem dar, da derartige Förderer üblicherweise Bestandteil einer größeren Fließfertigungsanlage sind. Eine Unterbrechung des Förderstroms hat daher nach kurzer Zeit den Stillstand der gesamten Fertigungsanlage zur Folge, wodurch erhebliche Produktionseinbußen auftreten können. Von der Kurve eines Förderers wird folglich erwartet, dass diese sehr zuverlässig funktioniert, wobei insbesondere ein Steckenbleiben des Werkstückträgers nahezu vollständig ausgeschlossen ist.

Bei der Kurve der DE 40 36 214 C2 fällt auf, dass der Krümmungsradius des gebogenen Innenfiihrungsabschnitts sehr gering ist. Dies hat zur Folge, dass der Werkstückträger in der Kurve nahezu eine reine Drehbewegung ausfüllt, wenn er in Führungseingriff mit dem gebogenen Innenführungsabschnitt steht. Da der gebogene Innenfiihrungsabschnitt in Umfangsrichtung sehr kurz ist, findet bei der Kurvenfahrt nur eine sehr langsame Gleitbewegung an dieser statt, die entsprechend wenig Reibung verursacht. Gleichzeitig ist bei der gesamten Kurvenfahrt eine günstige Ausrichtung des Werkstückträgers zu den Antriebsmitteln gewährleist. Diese Kurvenform ist beispielsweise von der aus der Fig. 9 der US 4,928,806 bekannten Kurvenform zu unterscheiden, bei der die gebogene Innenführung einen sehr viel größeren Kurvenradius aufweist. Bei derartigen Kurven ist regelmäßig ein gesonderter Antrieb im Kurvenbereich erforderlich, da der Werkstückträger neben der reinen Drehung eine erhebliche Verlagerung erfährt.

Eine Folge des geringen Kurvenradius der gebogenen Innenführung der DE 40 36 214 C2 ist der ebenfalls relativ geringe Kurvenradius der gebogenen Außenführung, welcher eine hohe Reibkraft zwischen Außenführung und Werkstückträger zur Folge hat. Darüber hinaus verursacht die Langrundform des Werkstückträgers meist sehr viel ungenutzten Platz, der von den Werkstücken nicht ausgenutzt werden kann, weshalb ein rechteckiger Werkstückträger regelmäßig bevorzugt wird.

Aus der DE 20 2005 009 213 U 1 ist ein Förderer gemäß dem Oberbegriff von Anspruch 1 bekannt. Der Förderer umfasst eine Förderbahn, auf der ein Werkstückträger in Form einer Kiste transportiert wird. Die geraden Abschnitte der Förderbahn sind in Form eines Doppelgurtförderers ausgebildet, als Antriebsmittel für den Werkstückträger sind also zwei parallel beabstandete Förderbänder vorgesehen, die eine Förderebene definieren. Die Kurve der Förderbahn umfasst eine starre kreisförmig gebogene Außenführung, die im Wesentlichen unterbrechungsfrei mit den geraden Außenführungsabschnitten verbunden ist. Die Innenführung der Führungsbahn umfasst einen ersten und einen zweiten geraden Innenführungsabschnitt, die parallel zu den zugeordneten Außenfiihrungsabschnitten angeordnet sind. Zwischen den geraden Innenführungsabschnitten ist ein konvex gebogener Innenführungsabschnitt vorgesehen. Der Krümmungsradius des gebogenen Innenführungsabschnitts ändert sich dabei stetig bis hin zur Mitte des Innenführungsabschnitts. Die Mitte des gebogenen Innenführungsabschnitts ist in Form einer kreisrunden Scheibe ausgeführt, die gegenüber einem gedachten tangentialen Verlauf zum ersten und zum zweiten geraden Innenführungsabschnitt bezüglich des gebogenen Außenfilhrungsabschnitts nach radial innen versetzt angeordnet ist. Hiermit wird erreicht, dass der vergleichsweise breite Werkstückträger durch die enge Kurve, die einen kleinen Krümmungsradius am Innenführungsabschnitt aufweist, gefördert werden kann. Der Nachteil dieser Kurve besteht in der übermäßigen Reibung an dem langen gebogenen Innenführungsabschnitt, welche den Fahrwiderstand des Werkstückträgers erhöht und zum Blockieren desselben führen kann.

Der EP1 157 780 offenbart einen Werkstückträger gemäß dem Oberbegriff des Anspruchs 14.

Die Aufgabe der vorliegenden Erfindung besteht darin, die Betriebssicherheit des Förderers zu steigern, wobei insbesondere der Fahrwiderstand des Werkstückträgers in der Kurve vermindert werden soll. Gleichzeitig soll ein möglichst großer im Wesentlichen rechteckiger Werkstückträger auf dem Förderer einsetzbar sein.

Gemäß Anspruch 1 wird vorgeschlagen, dass an einer inneren Seitenfläche des Werkstückträgers, die der Innenführung zugewandt ist, eine Ausweichausnehmung vorgesehen ist, die von einem ersten Wellental einer insgesamt wellenartigen inneren Seitenfläche gebildet ist, dass die Bewegung des Werkstückträgers nicht durch das Ende des ersten geraden Innenführungsabschnitts blockiert werden kann. Hierbei wird angenommen, dass der Werkstückträger von den Antriebsmitteln in einer Förderrichtung durch die Kurve bewegt wird, die vom ersten Außen- bzw. Innenfühnmgsabschnitt zum zweiten Außen- bzw. Innenführungsabschnitt gerichtet ist. Man ist üblicherweise bestrebt, die erste Innenführung so lange wie möglich auszuführen, also deren Ende möglichst weit in die Kurve hinein ragen zu lassen, damit der vorzugsweise im Wesentlichen rechteckige Werkstückträger möglichst lange seitlich geführt ist. Sobald jedoch das in Förderrichtung vorauseilende Ende des Werkstückträgers in Führungseingriff mit dem gebogenen Ausführungsabschnitt gelangt, wird der Werkstückträger nach radial innen umgelenkt, so dass seine innere Seitenfläche gegen das erste Ende der Innenführung gedrängt werden würde. Eine Weiterfahrt des Werkstäckträgers wäre folglich unmöglich. Um dem entgegenzuwirken ist die Ausweichausnehmung vorgesehen, die einen Freiraum schafft, in den das Ende der ersten Innenführung eintauchen kann, vorzugsweise ohne den Werkstückträger zu berühren. Die Tiefe und die Längserstreckung der Ausweichausnehmung müssen auf die vorliegende Kurvengeometrie abgestimmt werden. Dabei hat sich überraschenderweise gezeigt, dass die Ausweichausnehmung nur eine sehr geringe Tiefe aufweisen muss, um die genannte Kollision zu vermeiden. Die Form des Werkstückträgers weicht somit nur in geringem Maße von der bevorzugten Rechteckform ab, so dass hierdurch keine Nachteile bei seiner Benutzung verursacht werden. Die Ausweichausnehmung ist vorzugsweise bezüglich der Fahrtrichtung hinter einem Umlenkflächenabschnitt an der inneren Seitenfläche des Werkstückträgers vorgesehen, wobei der Umlenkflächenabschnitt der Abschnitt der inneren Seitenfläche ist, der in Führungseingriff mit dem gebogenen Innenführungsabschnitt steht, wenn der Werkstückträger mit dem gebogenen Außenführungsabschnitt in Führungseingriff steht.

In den abhängigen Ansprüchen sind vorteilhafte Weiterbildungen und Verbesserungen der Erfindung angegeben.

Der erste und/oder der zweite gerade Innenführungsabschnitt kann ein Ende aufweisen, wobei die Innenführung im Bereich zwischen dem genannten Ende und dem konvex gebogenen Innenführungsabschnitt so ausgeführt ist, dass eine Berührung zwischen der Innenführung und dem Werkstückträger ausgeschlossen ist. Wie weiter unten noch näher erläutert wird, muss der Werkstückträger beim Durchfahren der erfindungsgemäßen Kurve im Übergangsbereich zwischen dem Ende der geraden Innenführung und dem konvex gebogenen Innenführungsabschnitt die Innenführung nicht berühren, wobei dennoch eine ausreichende Führung desselben gewährleistet ist. Dementsprechend wird vorgeschlagen die Innenführung so auszuführen, dass tatsächlich kein Kontakt in diesem Bereich möglich ist, so dass unnötige Reibkräfte, die den Fahrwiderstand des Werkstückträgers erhöhen, vermieden werden.

Es ist denkbar, die Innenführung in diesem Bereich als ununterbrochene Kurve auszuführen. Das Ende der geraden Innenführung ist in diesem Fall der Punkt, an dem die genannte Kurve erstmalig vom geradlinigen Verlauf abweicht. Der Verlauf der ununterbrochenen Innenführung wird im Übergangsbereich so weit von der Förderbahn weg versetzt ausgeführt, dass der genannte Kontakt zwischen Innenführung und Werkstückträger ausgeschlossen ist. Zu diesem Zweck kann die Innenführung im Übergangsbereich beispielsweise von der Förderbahn her betrachtet konkav gekrümmt verlaufen. Aufgrund des geringeren Herstellungsaufwands ist es jedoch bevorzugt, wenn die beiden geraden Innenführungen und der konvex gebogene Innenführungsabschnitt als gesonderte Bauteile ausgeführt sind, wobei im Übergangsbereich zwischen den genannten Bauteilen ein Freiraum vorhanden ist. Die Innenführung ist also im Übergangsbereich unterbrochen. Das Ende der geraden Innenführung wird bei dieser Ausführungsform durch das Ende des zugeordneten Bauteils definiert.

Das Ende des zweiten geraden Innenführungsabschnitts kann so angeordnet sein, dass ein Führungsflächenabschnitt der inneren Seitenfläche des Werkstückträgers in Führungseingriff mit dem genannten Ende des zweiten geraden Innenführungsabschnitts gelangen kann. Hierbei wird wiederum angenommen, dass der Werkstückträger von den Antriebsmitteln in einer Förderrichtung durch die Kurve bewegt wird, die vom ersten Außen- bzw. Innenführungsabschnitt zum zweiten Außen- bzw. Innenführungsabschnitt gerichtet ist. Beim Durchfahren der Kurve endet der Führungseingriff zwischen dem Umlenkflächenabschnitt und dem gebogenen Innenführungsabschnitt, wenn das vorauseilende Ende des Werkstückträgers in Eingriff mit dem zweiten geraden Außenführungsabschnitt kommt. Um auch in dieser Bewegungsphase eine ausreichende Innenführung zu gewährleisten, ist der genannte Führungseingriff zwischen dem Führungsflächenabschnitt und dem Ende des zweiten geraden Innenführungsabschnitts vorgesehen. Der Führungsflächenabschnitt ist hierbei vorzugsweise bezüglich Förderrichtung vor dem Umlenkflächenabschnitt angeordnet. Da sich das Ende des zweiten geraden Innenführungsabschnitts im Wesentlichen punktförmig an dem Führungsflächenabschnitt entlang bewegt, ist eine minimale Reibungsentstehung gewährleistet. Durch diese Reibung wird keine Gefahr des Steckenbleibens des Werkstückträgers verursacht, weil letztgenannter in dieser Bewegungsphase nahezu parallel zur Antriebsrichtung der Antriebsmittel ausgerichtet ist, so dass die Antriebskräfte optimal wirken. Die Antriebsrichtung verläuft in diesem Fall parallel zum zweiten geraden Innen- bzw. Außenfiihrungsabschnitt.

Die innere Seitenfläche des Werkstückträgers kann eine ununterbrochene, knickfreie Form aufweisen. Hierdurch wird ein besonders gleichmäßiger und störungsfreier Eingriff zwischen dem Werkstückträger und der Innenführung ermöglicht, so dass ein Steckenbleiben des Werkstückträgers weiter erschwert wird.

Die innere Seitenfläche des Werkstückträgers kann wellenartig mit einem Wellenberg, einem ersten Wellental, das der Ausweichausnehmung entspricht, und einem zweiten Wellental, das dem Führungsflächenabschnitt entspricht, ausgeführt sein, wobei der Wellenberg so angeordnet ist, dass er in Führungseingriff mit dem gebogenen Innenführungsabschnitt gelangen kann. Vorzugsweise ist die wellenartige Innenführungsfläche spiegelsymmetrisch bezüglich einer Ebene quer zur Förderbahn ausgebildet. Der Wellenbauch entspricht demgemäß dem bereits genannten Umlenkflächenabschnitt. Durch die wellenartige Form der Innenführungsfläche gehen die verschiedenen Funktionsabschnitte besonders sanft ineinander über, so dass ein Steckenbleiben des Werkstückträgers weiter erschwert wird. Mit der bevorzugten symmetrischen Ausgestaltung der Innenführungskontur, und besonders bevorzugt des gesamten Werkstückträgers, wird erreicht, dass der Werkstückträger in beide mögliche Förderrichtungen der Förderbahn bewegt werden kann. Bei einer Förderrichtungsumkehr vertauschen die Enden des ersten und des zweiten geraden Innenföhrungsabschnitts ihre Funktionen.

Der Abstand der Enden des ersten und des zweiten geraden Innenführungsabschnitts zum gebogenen Innenführungsabschnitt kann im Wesentlichen gleich sein. Durch diese Maßnahme soll ebenfalls erreicht werden, dass die Förderrichtung umgekehrt werden kann. Dementsprechend ist diese Ausführungsform besonders vorteilhaft in Verbindung mit dem zuvor beschriebenen symmetrischen Werkstückträger.

An dem Ende des ersten und/oder des zweiten geraden Innenführungsabschnitts kann eine drehbare Leitrolle vorgesehen sein, die so in Führungseingriff mit dem Werkstückträger gelangen kann, dass sie auf dem Führungsflächenabschnitt abwälzt. Mit der Leitrolle sollen die Reibungskräfte zwischen dem Führungsflächenabschnitt und dem Ende des zweiten geraden Innenführungsabschnitts vermindert werden. Die Leitrolle am Ende des ersten geraden Innenführungsabschnitts ist für Fälle vorgesehen, in denen der Förderer in beide möglichen Förderrichtungen der Förderbahn betrieben wird.

Der Werkstückträger kann vier Eckabschnitte aufweisen, welche die Ecken eines gedachten Rechtecks definieren, wobei sich der Werkstückträger im Höhenbereich der Innen- und der Außenführung nicht über das gedachte Rechteck hinaus erstreckt. Der Werkstückträger ist hierbei vorzugsweise symmetrisch zur Längs- und zur Querachse des gedachten Rechtecks ausgebildet. Wie bereits mehrfach erwähnt ist bevorzugt daran gedacht, einen rechteckigen Werkstückträger einzusetzen. Um dessen Reibungswiderstand gegenüber der Innen- und der Außenführung zu vermindern, ist dieser so gestaltet, dass er die genannten Führungen nur an den vier Eckabschnitten berührt, um die Berührfläche und somit die Reibung zu vermindern. Dies gilt insbesondere in den geraden Abschnitten der Förderbahn und an dem gebogenen Außenführungsabschnitt. Die erfindungsgemäßen Berührungen des Werkstückträgers mit der Innenführung in Bereich der Kurve finden natürlich auch bei dieser Ausführungsform statt.

Die vier Eckabschnitte können als drehbare Führungsrollen ausgeführt sein. Hiermit wird erreicht, dass die genannten Eckabschnitte reibungsarm an der zugeordneten Innen- bzw. Außenführung abwälzen, so dass besonders wenig Reibung entsteht. Ein derartiger Werkstückträger, der mit der bereits genannten wellenförmigen Innenführungsfläche versehen ist, ist besonders gut geeignet, um in der erfindungsgemäßen Kurve einen störungsfreien Betrieb zu gewährleisten. Deshalb wird für diesen Werkstückträger selbstständiger Schutz angestrebt.

Der Werkstückträger kann einen Grundkörper aufweisen, wobei die Führungsrollen in einer Ausnehmung des Grundkörpers aufgenommen sind. Durch diese Ausgestaltung wird erreicht, dass sich die Nutzfläche des Werkstückträgers an der Oberseite des, vorzugsweise plattenartigen, Grundkörpers bis nahe an den Umriss der Leitrolle erstrecken kann. Die genannte Nutzfläche ist somit besonders groß und die bevorzugte Rechteckform wird nicht gestört. Gleichzeitig sind die Führungsrollen in der Ausnehmung geschützt aufgenommen, so dass deren Beschädigung auch dann nicht zu befürchten ist, wenn der Werkstückträger abseits der Förderstrecke gelagert oder auf sonstige Weise gehandhabt wird.

Der gebogene Außenführungsabschnitt und der gebogene Innenführungsabschnitt können kreisförmig mit dem gleichen Kreismittelpunkt gebogen sein. Vorzugsweise ist der Umlenkflächenabschnitt ebenfalls kreisförmig gebogen. In Bezug auf das Steckenbleiben des Werkstückträgers kommt es auf den kleinsten Krümmungsradius des gebogenen Außenführungsabschnitts an. Dementsprechend ist es am günstigsten, einen konstanten Krümmungsradius, also eine Kreisform zu wählen, wenn eine besonders platzsparende Kurve geschaffen werden soll. Durch die bevorzugte kreisförmige Krümmung des Umlenkflächenabschnitts ergibt sich eine besonders gleichförmige Drehbewegung des Werkstückträgers in der Kurve. Hierbei soll insbesondere der Wellenberg der wellenförmigen Innenführungsfläche kreisförmig gebogen sein.

Der gebogene Innenführungsabschnitt kann an einem gesonderten plattenartigen Innenführungsteil ausgebildet sein, wobei eine Haltebaugruppe vorgesehen ist, an der das Innenführungsteil in unterschiedlichen Radialpositionen bezüglich des gebogenen Außenführungsabschnitts befestigbar ist. Durch die Lageverstellbarkeit des Innenführungsteils wird erreicht, dass ein und dasselbe Halteteil in verschiedenen Förderem eingesetzt werden kann, in der Werkstückträger mit unterschiedlichen Abmessungen zum Einsatz kommen. Die Haltebaugruppe ist bei dieser Ausführungsform bevorzugt an dem ersten und dem zweiten geraden Innenführungsabschnitt befestigt, da hierdurch eine besonders kompakte Haltebaugruppe möglicht wird.

Es kann ein drehbarer Weichenarm vorgesehen sein, dessen Drehachse senkrecht zur Förderebene ausgerichtet und außerhalb der Förderbahn angeordnet ist, wobei der Weichenarm den gebogenen Außenführungsabschnitt bildet, wobei der Weichenarm in eine Stellung gedreht werden kann, in der sein der Drehachse abgewandtes Ende in eine Halteausnehmung der Haltebaugruppe eingreift, in der das Innenführungsteil angeordnet ist. Ein drehbarer Weichenarm, der den gebogenen Außenführungsabschnitt einer Kurve einer Förderstrecke definiert, ist aus dem Stand der Technik grundsätzlich bekannt. Bei derartigen Weichenarmen wird üblicherweise angestrebt, dass das genannte der Drehachse abgewandte Ende in den Endstellungen gut abgestützt ist, damit der Weichenarm eine steife Führung des Werkstückträgers bereitstellt. Mit der vorgeschlagenen Ausführungsform kann diese Abstützung auf besonders kostengünstige Weise realisiert werden.

Die Erfindung wird im Folgenden anhand der beigefügten Zeichnungen näher erläutert. Es stellt dar:
- Fig. 1: eine Draufsicht eines erfindungsgemäßen Förderers, wobei sich der Werkstückträger in einem ersten Stadium der Kurvendurchfahrt befindet;
- Fig. 1a: eine Abwandlung von Fig. 1, bei welcher sich der Werkstückträger in einem zweiten Stadium der Kurvendurchfahrt befindet;
- Fig. 1b: eine Abwandlung von Fig. 1, bei welcher sich der Werkstückträger in einem dritten Stadium der Kurvendurchfahrt befindet;
- Fig. 1c: eine Abwandlung von Fig. 1, bei welcher sich der Werkstückträger in einem vierten Stadium der Kurvendurchfahrt befindet;
- Fig. 1d: eine Abwandlung von Fig. 1, bei welcher sich der Werkstückträger in einem fünften Stadium der Kurvendurchfahrt befindet;
- Fig. 2: einen weiteren erfindungsgemäßen Förderer, der als Weiche ausgebildet ist, wobei sich der Weichenarm in einer ersten Stellung befindet;
- Fig. 2a: eine Abwandlung von Fig. 2, bei welcher sich der Weichenarm in einer zweiten Stellung befindet;
- Fig. 3: eine Explosionsdarstellung des Werkstückträgers; und
- Fig. 4: eine Explosionsdarstellung der Haltebaugruppe mit dem Innenführungsteil.

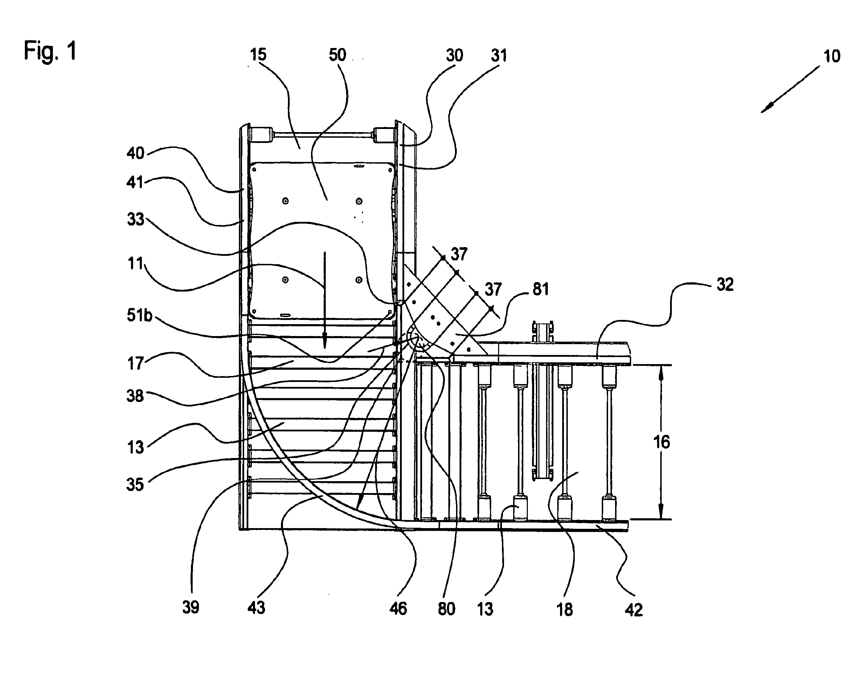

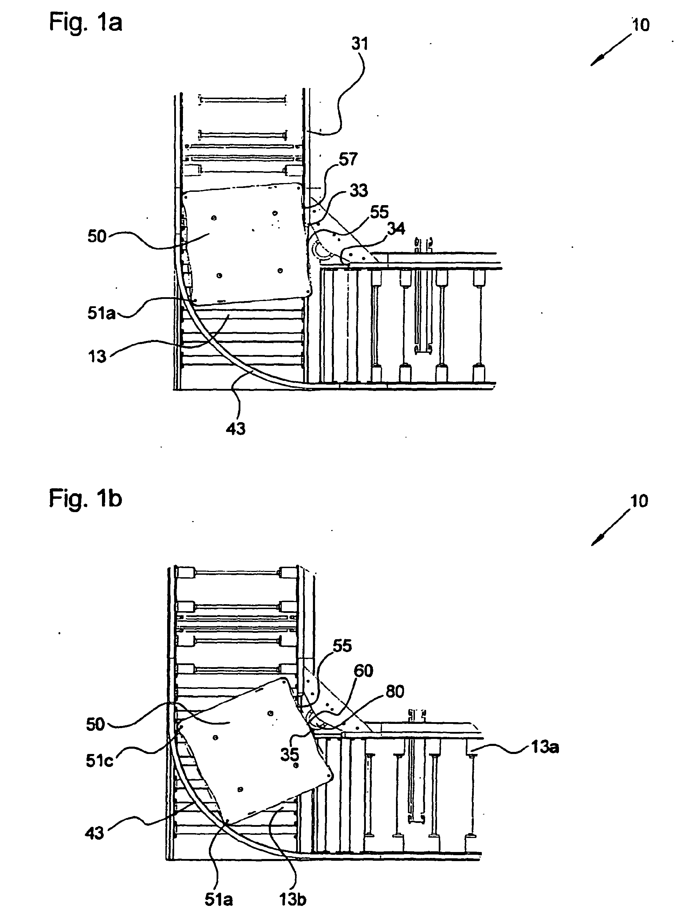

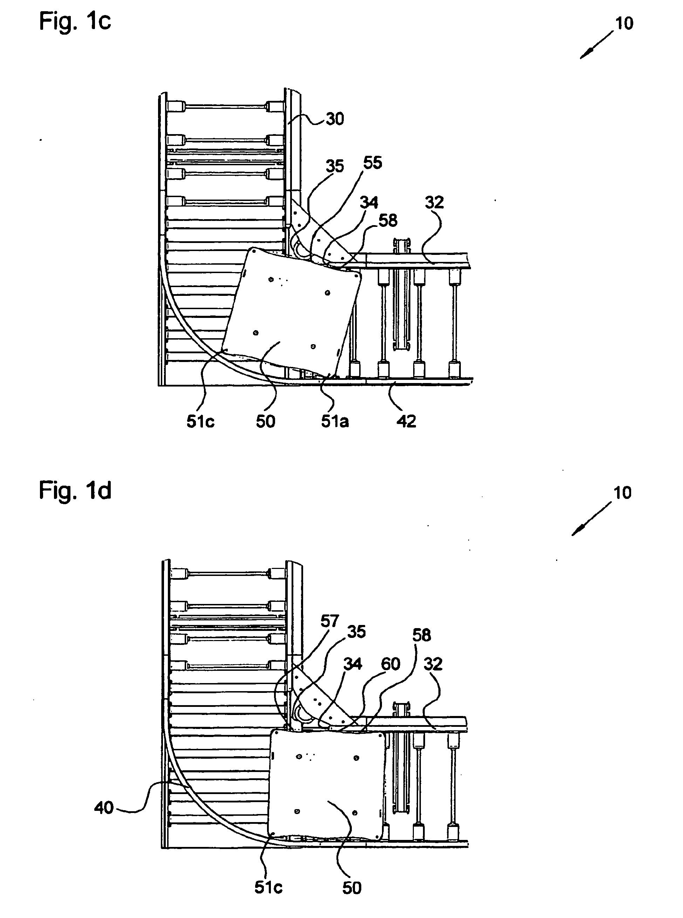

Fig. 1 zeigt einen erfindungsgemäßen Förderer 10 mit einem Werkstückträger 50, wobei die dargestellte Kurve einen Abschnitt einer wesentlich umfangreicheren Förderanlage bildet. Der Förderer 10 umfasst eine erste und eine zweite Rollenbahn 17; 18, die im Wesentlichen gesondert voneinander ausgeführt und im rechten Winkel zueinander aufgestellt sind. Die Rollenbahnen 17; 18 umfassen jeweils eine Vielzahl von parallelen Förderrollen 13, die zusammen eine Förderebene definieren. Die Förderrollen 13 sind einzeln angetrieben, wobei der Antrieb gemäß der DE 10 2008 046 520 ausgeführt ist, die hiermit in vollem Umfang in Bezug genommen und zum Inhalt der vorliegenden Anmeldung gemacht wird. Die Förderrollen 13 dienen somit als reibschlüssiges Antriebsmittel für den Werkstückträger 50, um ihn in einer Förderrichtung 11 in Bewegung zu versetzten. Als Antriebsmittel können aber auch Förderriemen, Rollenketten oder ähnliches zum Einsatz kommen.

Der Werkstückträger 50 wird seitlich durch eine Innenführung 30 und eine Außenführung 40 geführt, die zusammen eine kurvenförmige Förderbahn 15 definieren. Die Förderbahn 15 umfasst jeweils einen geraden Abschnitt auf den beiden Rollenbahnen 17; 18, der durch die ersten bzw. zweiten Außenführungsabschnitte 41; 42 und den zugeordneten ersten bzw. zweiten Innenfahrungsabschnitten 31; 32 definiert wird. Die genannten geraden Innen- und Außenführungsabschnitte sind jeweils mit einer Bahnbreite 16 parallel beabstandet zueinander angeordnet, wobei die Bahnbreite 16 etwas größer als die Seitelänge des im Wesentlichen quadratischen Werkstückträgers 50 ist, so dass letztgenannter mit geringem Spiel seitlich geführt ist.

Der erste und der zweite gerade Außenführungsabschnitt 41; 42 sind über einen kreisförmig gebogenen Außenführungsabschnitt 43 miteinander verbunden, der einen äußeren Krümmungsradius 46 aufweist, der etwa der 1,2-fachen Bahnbreite 16 entspricht. Die gesamte Außenführung 40 ist unterbrechungsfrei aus mehreren Aluminiumstrangpressprofilen zusammengesetzt, so dass der Werkstückträger 50 außen unterbrechungsfrei geführt ist.

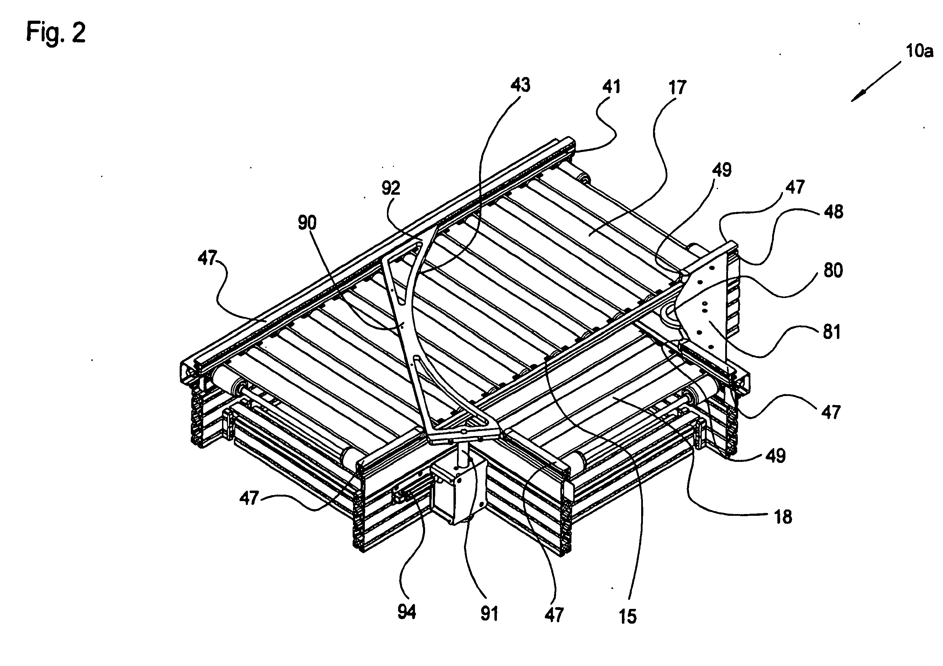

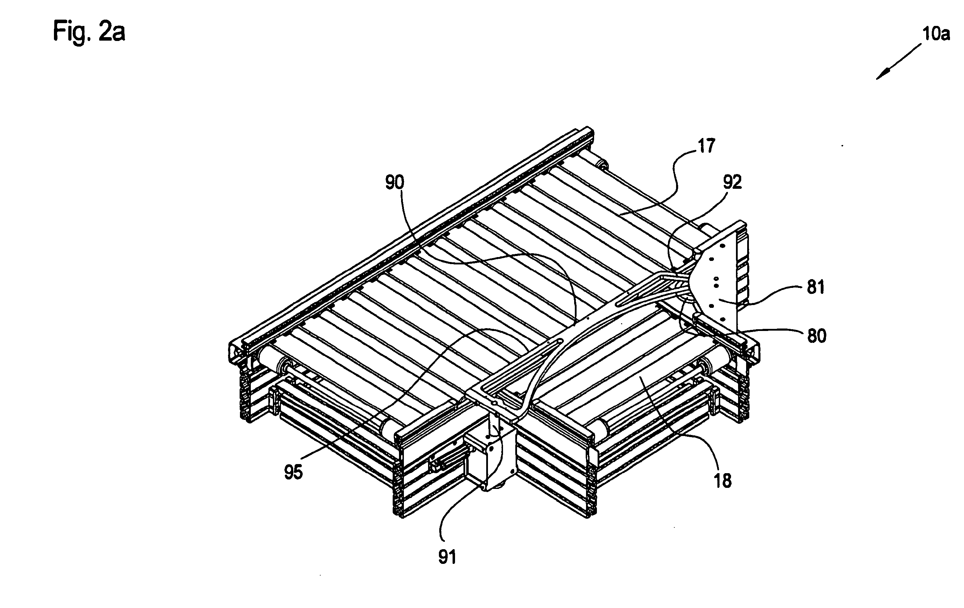

Dem gebogenen Außenführungsabschnitt 43 ist als Innenführung 30 ein gesondertes Innenführungsteil 80 mit einem gebogenen Innenführungsabschnitt 35 zugeordnet. Der kreisförmig gebogene Innenführungsabschnitt 35 besitzt einen inneren Krümmungsradius, 38 der etwa der 0,1-fachen Bahnbreite 16 entspricht, wobei die Krümmungsmittelpunkte des gebogenen Innen- und des gebogenen Außenführungsabschnitts 35; 43 zusammenfallen. Die Differenzen zwischen dem äußeren Krümmungsradius 46 und dem inneren Krümmungsradius 38 ist größer als die Bahnbreite 16, so dass der gebogene Innenführungsabschnitt 35 gegenüber einem gedachten tangentialen Verlauf 39 zum ersten und zum zweiten geraden Innenführungsabschnitt 31; 32 bezüglich des gebogenen Außenführungsabschnitts 43 nach radial innen versetzt angeordnet ist. In diesem Zusammenhang ist anzumerken, dass der gebogene Außenführungsabschnitt 43 bei der Ausführungsform gemäß Fig. 1 tangential zum ersten und zum zweiten geraden Außenführungsabschnitt 41; 42 verläuft. Dies muss aber nicht notwendigerweise so sein, wie man bei der Ausführungsform gemäß Fig. 2 erkennt.

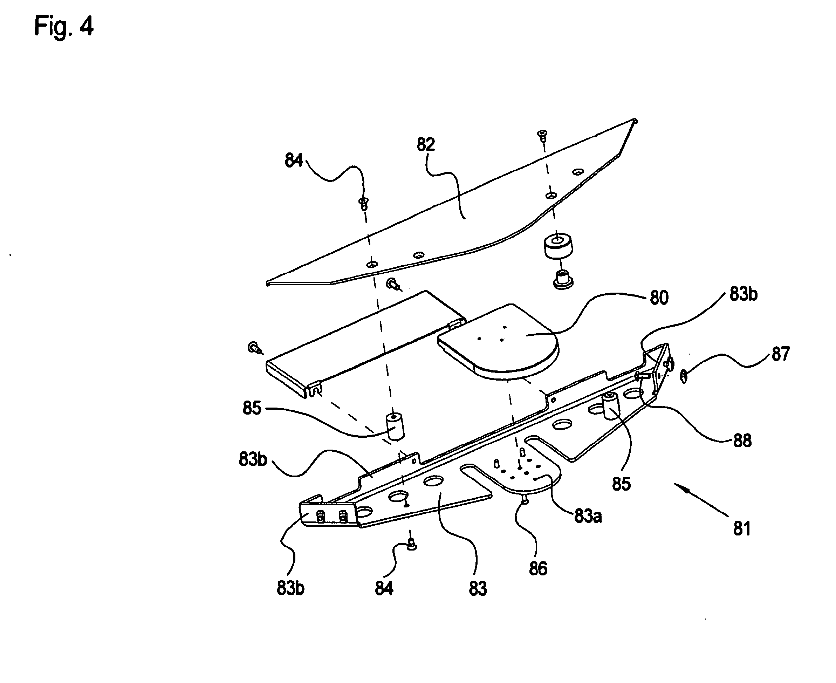

Das gesonderte Innenführungsteil 80 ist mit einer Haltebaugruppe 81, die mit Bezug auf Fig. 4 noch näher beschrieben wird, an dem ersten und dem zweiten geraden Innenführungsabschnitt 31; 32 befestigt. Zwischen den abgerundeten Enden 33; 34 des ersten und des zweiten geraden Innenführungsabschnitts ist jeweils ein Freiraum mit einer Breite 37 vorhanden, die in beiden Fällen identisch ist. Die Innenführung 30 ist also in diesem Übergangsbereich unterbrochen, so dass der Werkstückträger 50 hier nicht seitlich geführt ist.

Fig. 1 zeigt den Werkstückträger 50 in einem ersten Stadium der Kurvendurchfahrt, wobei die Förderrichtung 11 von der ersten Rollbahn 17 zur zweiten Rollenbahn 18 verläuft. In den Figuren 1a bis 1d sind weitere Stadien der Kurvendurchfahrt dargestellt, wobei sich die genannten Figuren im Übrigen nicht von der Fig. 1 unterscheiden. In Fig. 1 befindet sich der Werkstückträger 50 vollständig innerhalb des ersten geraden Außen- bzw. Innenführungsabschnitts 41; 31, wobei sich der vordere innere Eckabschnitt 51b kurz hinter dem Ende 33 des ersten geraden Innenführungsabschnitts 31 befindet.

Fig. 1a zeigt den Werkstückträger 50 in einem Zustand, bei dem der vorauseilende äußere Eckabschnitt 51 a in Führungseingriff mit dem gebogenen Außenführungsabschnitt 43 gelangt ist. Dies hat zur Folge, dass der Werkstückträger 50 etwas zum Kurveninneren hin verschwenkt wird. Um eine Kollision mit dem Ende 33 des ersten geraden Innenführungsabsehnitts 31 zu vermeiden, ist deshalb an der entsprechenden inneren Seitenfläche 55 des Werkstückträgers eine Ausweichausnehmung 57 vorgesehen. Die Ausweichausnehmung 57 wird hierbei von einem ersten Wellental einer insgesamt wellenartigen inneren Seitenfläche 55 gebildet. Die Ausweichausnehmung 57 ist so tief ausgeführt, dass ein Blockieren des Werkstückträgers ausgeschlossen ist, wobei die Tiefe der Ausweichausnehmung 57 so gewählt ist, dass in vielen Fällen überhaupt keine Berührung zwischen der Ausweichausnehmung 57 und dem Ende 33 des ersten geraden Innenführungsabschnitts 31 stattfindet. Hierbei ist aber anzumerken, dass der Werkstückträger in dieser Bewegungsphase nicht statisch bestimmt geführt ist, d.h. es ist grundsätzlich möglich, den Werkstückträger 50 so weit zum Kurveninneren zu drehen, dass die Ausweichausnehmung 57 das Ende 33 des ersten geraden Innenführungsabschnitts 31 berührt. Die tatsächlich vorhandenen Reibkräfte der Förderrollen 13 am Werkstückträger 50 führen aber in der Regel dazu, dass eine solche Berührung nicht stattfindet.

Fig. 1b zeigt den Werkstückträger 50 in einem Zustand, bei dem der Wellenberg 60 der inneren Seitenfläche 55 in Führungseingriff mit dem gebogenen Innenführungsabschnitt 35 steht. In dieser Bewegungsphase befindet sich sowohl der vordere 51 a als auch der hintere äußere Eckbereich 51c des Werkstückträgers 50 innerhalb des gebogenen Außenführungsabschnitts 43, wobei immer ein minimales Spiel, das in Fig. 1b beim Eckbereich 51c erkennbar ist, gewährleistet sein muss, damit der Werkstückträger 50 nicht blockiert. Dieses Spiel muss bei der Montage der Kurve so eingestellt werden, dass ein optimaler Ablauf des Werkstückträgers 50 gegeben ist. Die Spieleinstellung kann beim vorliegenden Förderer 10 problemlos durch eine Verlagerung des Innenführungsteils 80 bewerkstelligt werden. Bei diesem Vorgang wird letztlich die erfindungsgemäße radiale Verlagerung des gebogenen Innenführungsabschnitts vorgenommen, um genügend Raum für die Fahrt des Werkstückträgers 50 bereitzustellen. Hinzuweisen ist noch darauf, dass die Förderrollen 13b in diesem Bereich der Kurve als durchgehende Rollen ausgebildet sind, während die unterbrochenen Förderrollen 13a abseits der Kurve die Werkstückträger 50 nur am Rand tragen. Dies ist notwendig, damit in der Kurve ein ausreichender Kraftschluss zwischen dem Werkstückträger 50 und den Förderrollen 13b besteht.

Fig. 1c zeigt den Werkstückträger 50 in einem Zustand, bei dem der vordere äußere Eckabschnitt 51 a bereits wieder in Führungseingriff mit dem zweiten geraden Außenführungsabschnitt 42 steht. Insbesondere ist die Stellung gezeigt, bei der der Führungseingriff an der Innenführung 30 von dem gebogenen Innenführungsabschnitt 35 auf das Ende 34 des zweiten geraden Innenführungsabschnitts 32 übergeht. Das Ende 34 gleitet an einem Führungsflächenabschnitt 58 der inneren wellenartigen Seitenfläche 55 ab, der von einem zweiten Wellental gebildet wird. Hinzuweisen ist wiederum auf das in Fig. 1c gezeigte Spiel im Bereich des hinteren äußeren Eckabschnitts 51 c.

Fig. 1d zeigt den Werkstückträger 50 in einem Zustand, bei dem auch der hintere äußere Eckabschnitt 51 c wieder in Eingriff mit der Außenführung 40 steht. Dies wird dadurch bewirkt, dass das Ende 34 des zweiten geraden Innenführungsabschnitts 32 auf den Wellenberg 60 der wellenartigen inneren Seitenfläche aufläuft, wodurch der Werkstückträger 50 von dem gebogenen Innenführungsabschnitt 35 abgehoben und in Richtung der Außenführung 40 verlagert wird. Es ist darauf hinzuweisen, dass der Werkstückträger 50 sowohl zur Längsachse als auch zur Querachse symmetrisch ist, so dass er sowohl für Rechts- und Linkskurven als auch für Vor- und Rückwärtsfahrt einsetzbar ist. Dies hat zur Folge, dass die vorliegende Ausweichausnehmung 57 bei umgekehrter Fahrrichtung als Führungsflächenabschnitt 58 wirkt.

Fig. 2 zeigt eine weitere Ausführungsform eines erfindungsgemäßen Förderers 10a, bei welcher der gebogene Außenführungsabschnitt 43 als drehbarer Weichenarm 90 ausgeführt ist. Der Weichenarm 90 kann um die Drehachse 91 in die in Fig. 2a dargestellte Stellung gedreht werden, so dass die erste Rollenbahn 17 vom (nicht dargestellten) Werkstückträger durchfahren werden kann, ohne dass er auf die zweite Rollenbahn 18 umgelenkt wird. Bei dem Förderer gemäß Fig. 2 handelt es sich also um eine Weiche. Die Bewegung des Weichenarmes 90 wird von einem Pneumatikzylinder 94 bewirkt, der über einen Hebelarm an der Drehachse 91 angreift, wobei sein gegenüberliegendes Ende an der ersten Rollenbahn 17 befestigt ist. Der Weichenarm 90 ist so gestaltet, dass er den Bauraum einnehmen kann, den auf der gegenüberliegenden Seite der Förderbahn 15 die Haltebaugruppe 81 mit dem Innenführungsteil 80 einnimmt.

Das von der Drehachse 91 abgewandte Ende 92 des Weichenarms 90 ist in der Stellung gemäß Fig. 2 an dem ersten geraden Außenführungsabschnitt 41 abgestützt, damit die Umlenkkräfte, die durch den Werkstückträger verursacht werden, kein Drehmoment verursachen, das den Antrieb 94 des Weichenarms 90 belastet. Der gebogene Außenführungsabschnitt 43 geht mit einem deutlichen Knick in den ersten geraden Außenführungsabschnitt 41 über, so dass der Weichenarm 90 in diesem Bereich eine genügend große Materialstärke aufweist, um die durch den Werkstückträger hervorgerufenen Belastungen tragen zu können. Diese Gestaltung des Weichenarms 90 führt dazu, dass sich das Spiel des Werkstückträgers in der Kurve gegenüber den in den Figuren 1 bis 1d gezeigten Verhältnissen etwas erhöht, was sich allerdings als unschädlich herausgestellt hat.

In Fig. 2 sind überdies die Aluminiumprofile 47 zu erkennen, die zur Bildung der Außen- und Innenführung verwendet wurden. Diese Aluminiumprofile 47 sind mit hinterschnittenen Nuten 48 versehen, an denen die Haltebaugruppe 81 befestigt ist. Die Enden des ersten und des zweiten geraden Innenführungsabschnitts werden von einem gesonderten Endstück 49 aus Kunststoff gebildet, das eine halbzylindrische Form aufweist und an den Stirnseiten der zugeordneten Aluminiumprofile 47 festgeschraubt ist. Es ist darauf hinzuweisen, dass sich die Ausführungsform gemäß Fig. 2 mit Ausnahme des Weichenarms 90 nicht von der Ausführungsform gemäß Fig. 1 unterscheidet, so dass die vorstehenden Ausführungen auch dort gelten, wobei gleiche Bezugsziffern gleiche Teile bezeichnen.

Fig. 2a zeigt die Weiche in einer zweiten Stellung, bei der (nicht dargestellte) Werkstückträger nicht von der ersten Rollenbahn 17 auf die zweite Rollenbahn 18 abgelenkt wird. Zu diesem Zweck wurde der Weichenarm 90 in eine Stellung gedreht, bei der sein der Drehachse 91 abgewandtes Ende 92 in die Haltebaugruppe 81 eingreift, wobei der im Wesentlichen plattenartige Weichenarm 90 oberhalb des Innenführungsteils 80 angeordnet ist. Daraus ergibt sich, dass sich der gebogene Außenführungsabschnitt 43 am Weichenarm 91 und der gebogene Innenführungsabschnitt am Innenführungsteil 80 in verschiedenen Höhenbereichen bezüglich der Förderebene befinden. Dementsprechend muss der im Wesentlichen plattenartige Werkstückträger eine genügend große Dicke aufweisen, so dass er von beiden gebogenen Führungsabschnitten erfasst werden kann. Durch den genannten Eingriff in die Haltebaugruppe 81 wird erreicht, dass der Weichenarm 91 sich nicht nach oben oder unten weg biegen kann, wodurch die gerade Führungsfläche 95 des Weichenarms 90 außer Eingriff mit dem Werkstückträger geraten könnte.

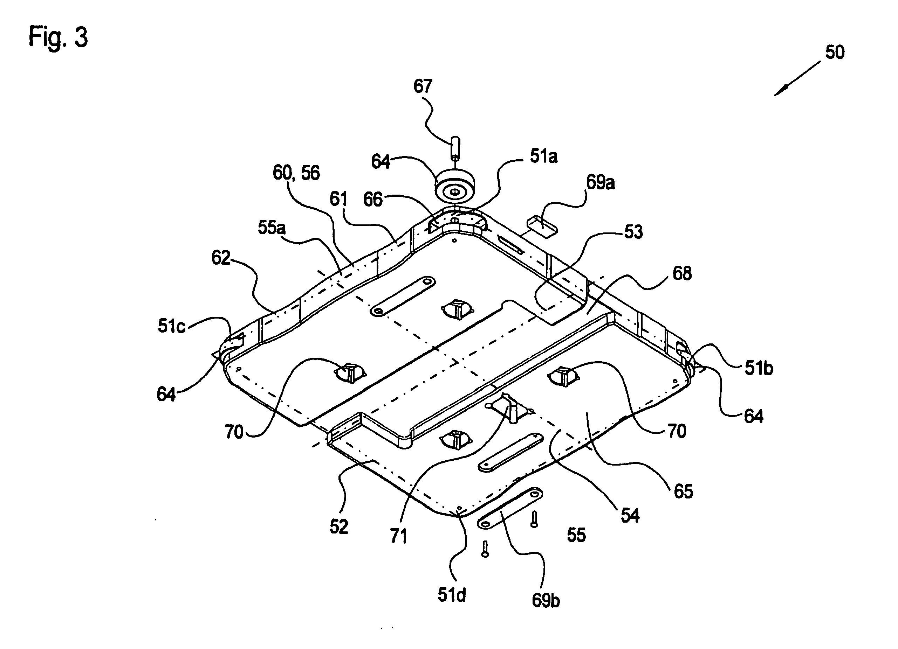

Fig. 3 zeigt eine Explosionsdarstellung des Werkstückträgers 50. Der Werkstückträger 50 umfasst einen im Wesentlichen quadratischen, plattenartigen Grundkörper 65 aus Kunststoff. An den vier Eckabschnitten 51a;51b;51c;51d ist je eine Führungsrolle 64 vorgesehen, die an einem Zylinderstift 67 drehbar gelagert ist. Jede Führungsrolle 64 ist in einer angepassten Ausnehmung 66 so aufgenommen, dass sie etwas über den Grundkörper 65 überstehen. Die vier Führungsrollen 64 definieren somit ein gedachtes Quadrat 52, wobei sich der Grundkörper 65 nicht über dieses Quadrat 52 hinaus erstreckt. Somit ist immer gewährleistet, dass nur die Führungsrollen 64 an den Aluminiumprofilen (Fig. 2; 47) anliegen, welche die Innen- und Außenführung bilden, wodurch ausschließlich Rollreibung zwischen dem Werkstückträger und der Seitenführung auftritt. Soweit der Werkstückträger 50 mit Aufbauten versehen ist, die zum Halten der Werkstücke vorgesehen sind, muss gewährleistet sein, dass diese sich nicht in den Höhenbereich der Innen- bzw. Außenführung hinein erstreckt, der im Wesentlichen durch die Höhe der Aluminiumprofile (Fig. 2; 47) definiert ist. Hinzuweisen ist außerdem darauf, dass die Umrandung des Werkstückträgers 50 sowohl bezüglich der Längs- 53 als auch der Querachse 54 des gedachten Quadrats 52 symmetrisch ausgebildet ist.

Zwei gegenüberliegende Seitenflächen 55; 55a des Werkstückträgers sind zwischen den Führungsrollen 64 wellenartig mit einem ersten 61 und einem zweiten Wellental 62 und einem Wellenberg 60 ausgeführt, wobei die genannten Bereiche knick- und absatzfrei ineinander übergehen. Wie mit Bezug auf die Figuren 1 bis 1d erläutert, bilden diese Konturen die Ausweichausnehmung, den Umlenkflächenabschnitt 56 bzw. den Führungsflächenabschnitt, wobei die Zuordnung von Funktion und Geometrie von der Fahrtrichtung des Werkstückträgers 50 abhängt.

An der Unterseite des Werkstückträgers 50 ist ein Vereinzelerdurchlass 68, der in bekannter Weise als Ausnehmung ausgebildet ist, vorgesehen. Weiter ist der Werkstückträger 50 mit verschiedenen Metalleinlagen 69a; 69b versehen, die dazu vorgesehen sind, ein Ansprechen von induktiven Näherungsschaltern zu bewirken, welche am Rand oder unter der Förderbahn vorgesehen sind. Mit den genannten Näherungsschaltern kann die An- oder Abwesenheit eines Werkstückträgers in Bezug auf eine bestimmte Stellung auf der Förderstrecke festgestellt werden.

Weiter ist an der Unterseite des Werksttickträgers 50 eine Aufnahmeausnehmung 71 für ein RFID-Tag, also einen drahtlos auslesbaren Datenspeicher, vorgesehen. Die Verwendung derartiger Datenspeicher in Förderanlagen ist üblich um festzustellen, welcher der Vielzahl von Werkstückträgern, die sich im Umlauf befinden, sich vor dem zugeordneten RFID-Lesegerät befindet, welches meist einer Bearbeitungsstation für die geförderten Werkstücke zugeordnet ist.

Zuletzt ist auf die vier Sacklöcher 70 hinzuweisen, die dazu vorgesehen sind, Gewindemuttern aus Metall aufzunehmen, so dass Aufbauten auf der Oberseite des Werkstückträgers 50 mit diesem verschraubt werden können.

Fig. 4 zeigt die Haltebaugruppe 81 mit dem Innenführungsteil 80. Die Haltebaugruppe 81 umfasst eine untere Platte 83 aus Stahlblech, die mit mehreren um 90° umgebogenen Laschen 83b versehen ist. An der unteren Platte 83 ist eine obere Platte 82 über Distanzbuchsen 85 und erste Schraubbolzen 84 befestigt. Die obere Platte 82 besteht ebenfalls aus Stahlblech und bildet zusammen mit der unteren Platte 83 eine im Wesentlichen kastenartige Struktur mit einer Halteausnehmung. Innerhalb der Halteausnehmung ist das Innenführungsteil 80 aufgenommen, welches mit zweiten Schraubbolzen 86 an der unteren Platte 83 befestigt ist. Hierfür sind in der unteren Platte 83 eine Vielzahl von Befestigungsbohrungen 83a vorgesehen, damit das Innenführungsteil 80 in unterschiedlichen Positionen befestigt werden kann. Somit kann die gesamte Baugruppe in Förderern mit unterschiedlichen Bauabmessungen eingesetzt werden. Weiter sind dritte Schraubbolzen 88 vorgesehen, die über Hammermuttern 87 in die hinterschnittenen Nuten (Fig. 2; 48) der Aluminiumprofile (Fig. 2; 47) eingreifen, um die gesamte Baugruppe am Förderer zu befestigen. Hinzuweisen ist darauf, dass die obere Platte 82 beabstandet zum Innenführungsteil 80 angeordnet ist, so dass der Weichenarm (Fig. 2; 90) in den entsprechenden Freiraum eingreifen kann, wie bereits mit Bezug auf Fig. 2a beschrieben.

### Bezugszeichenliste

- 10: Förderer (erste Ausfuhrungsform)
- 10a: Förderer (zweite Ausführungsform)
- 11: Förderrichtung
- 13: Förderrolle
- 13a: unterbrochene Förderrolle
- 13b: durchgehende Förderrolle
- 15: Förderbahn
- 16: Bahnbreite
- 17: erste Rollenbahn
- 18: zweite Rollenbahn

- 30: Innenführung
- 31: erster gerader Innenführungsabschnitt
- 32: zweiter gerader Innenführungsabschnitt
- 33: Ende des ersten geraden Innenführungsabschnitts
- 34: Ende des zweiten geraden Innenführungsabschnitts
- 35: gebogener Innenführungsabschnitt
- 37: Abstand
- 38: innerer Krümmungsradius
- 39: gedachter tangentialer Verlauf des gebogenen Innenführungsabschnitts

- 40: Außenführung
- 41: erster gerader Außenführungsabschnitt
- 42: zweiter gerader Außenführungsabschnitt
- 43: gebogener Außenführungsabschnitt
- 46: äußerer Krümmungsradius
- 47: Aluminiumprofile
- 48: hinterschnittene Nut für Haltebaugruppe
- 49: Endstück

- 50: Werkstückträger
- 51 a: vorderer äußerer Eckabschnitt
- 51 b: vorderer innerer Eckabschnitt
- 51c: hinterer äußerer Eckabschnitt
- 51 d: hinterer innerer Eckabschnitt
- 52: gedachtes Rechteck
- 53: Längsachse des Rechtecks
- 54: Querachse des Rechtecks
- 55: innere Seitenfläche
- 55a: äußere Seitenfläche
- 56: Umlenkflächenabschnitt
- 57: Ausweichausnehmung
- 58: Führungsflächenabschnitt
- 60: Wellenberg
- 61: erstes Wellental
- 62: zweites Wellental
- 63: Symmetrieebene
- 64: Führungsrolle
- 65: Grundkörper
- 66: Ausnehmung für die Führungsrolle
- 67: Zylinderstift
- 68: Vereinzelerdurchlass
- 69a: Metalleinlage
- 69b: Metalleinalge
- 70: Sackloch
- 71: Aufnahmeausnehmung für RFID-Tag

- 80: Innenführungsteil
- 81: Haltebaugruppe
- 82: obere Platte
- 83: untere Platte
- 83a: Befestigungsbohrung

- 83b: Lasche
- 84: erster Schraubbolzen
- 85: Distanzbuchse
- 86: zweiter Schraubbolzen
- 87: Hammermutter
- 88: dritter Schraubbolzen

- 90: Weichenarm
- 91: Drehachse
- 92: der Drehachse abgewandtes Ende des Weichenarms
- 94: Pneumatikzylinder
- 95: gerade Führungsfläche des Weichenarms

## Patentansprüche

1. Förderer (10) mit wenigstens einem Werkstückträger (50), wobei ein Antriebsmittel (13) für den Werkstückträger (50) vorgesehen ist, das eine Förderebene definiert, wobei eine Innenführung (30) und eine Außenführung (40) vorgesehen ist, die für den Werkstückträger (50) eine Förderbahn (15) definieren,
wobei die Außenführung (40) einen ersten geraden Außenführungsabschnitt (41), einen von der Förderbahn (15) her betrachtet konkav gebogenen Außenführungsabschnitt (43) und einen zweiten geraden Außenführungsabschnin (42) umfasst, die nacheinander angeordnet sind, so dass sie den Werkstückträger (50) unterbrechungsfrei führen können,
wobei die Innenführung (30) einen ersten und einen zweiten geraden Innenführungsabschnitt (31; 32) aufweist, die jeweils mit einer vorgegebenen Bahnbreite (16) parallel beabstandet zum ersten und zum zweiten geraden Außenführungsabschnitt (41; 42) angeordnet sind,
wobei die Innenführung (30) weiter einen von der Förderbahn (15) her betrachtet konvex gebogenen Innenführungsabschnitt (35) aufweist, der dem gebogenen Außenführungsabschnitt (43) zugeordnet ist, wobei der Krümmungsradius (38) des gebogenen Innenführungsabschnitts (35) kleiner als 50% der Bahnbreite (16) ist und vorzugsweise kleiner als 20% der Bahnbreite (16) ist,
wobei der konvex gebogene Innenführungsabschnitt (35) gegenüber einem gedachten tangentialen Verlauf (39) zum ersten und zum zweiten geraden Innenführungsabschnitt (31; 32), bezüglich des gebogenen Außenführungsabschnitts (43) nach radial innen versetzt angeordnet ist,
**dadurch gekennzeichnet, dass** an einer inneren Seitenfläche (55) des Werkstückträgers (50), die der Innenführung (30) zugewandt ist, eine Ausweichausnehmung (57) vorgesehen ist, die von einem ersten Wellental der insgesamt wellenartigen inneren Seitenfläche gebildet ist, so dass die Bewegung des Werkstückträgers (50) nicht durch das Ende (33) des ersten geraden Innenführungsabschnitts (31) blockiert werden kann.

2. Förderer nach Anspruch 1,
**dadurch gekennzeichnet, dass** der erste und/oder der zweite gerade Innenführungsabschnitt (31; 32) ein Ende (33; 34) aufweist, wobei die Innenführung (30) im Bereich (37) zwischen dem genannten Ende (33; 34) und dem konvex gebogenen Innenführungsabschnitt (35) so ausgeführt ist, dass eine Berührung zwischen der Innenführung (30) und dem Werkstückträger (50) ausgeschlossen ist.

3. Förderer nach einem der vorstehenden Ansprüche,
**dadurch gekennzeichnet, dass** das Ende (34) des zweiten geraden Innenführungsabschnitts (32) so angeordnet ist, dass ein Führungsflächenabschnitt (58) der inneren Seitenfläche (55) des Werkstückträgers (50) in Führungseingriff mit dem genannten Ende (34) des zweiten geraden Innenführungsabschnitts (32) gelangen kann.

4. Förderer nach Anspruch 3,
**dadurch gekennzeichnet, dass** die innere Seitenfläche (55) des Werkstückträgers (50) eine ununterbrochene, knickfreie Form aufweist.

5. Förderer nach Anspruch 4,
**dadurch gekennzeichnet, dass** die innere Seitenfläche (55) des Werkstückträgers (50) wellenartig mit einem Wellenberg (60), einem ersten Wellental (61), das der Ausweichausnehmung (57) entspricht, und einem zweiten Wellental (62), das dem Führungsflächenabschnitt (58) entspricht, ausgeführt ist, wobei der Wellenberg (60) so angeordnet ist, dass er in Führungseingriff mit dem gebogenen Innenführungsabschnitt (35) gelangen kann.

6. Förderer nach einem der vorstehenden Ansprüche,
**dadurch gekennzeichnet, dass** der Abstand (37) der Enden (33; 34) des ersten und des zweiten geraden Innenführungsabschnitts (31; 32) zum gebogenen Innenführungsabschnitt (35) im Wesentlichen gleich ist.

7. Förderer nach einem der Ansprüche **3 bis 6,**
**dadurch gekennzeichnet, dass** an dem Ende (33; 34) des ersten und/oder des zweiten geraden Innenführungsabschnitts (31; 32) eine drehbare Leitrolle vorgesehen ist, die so in Führungseingriff mit dem Werkstückträger (50) gelangen kann, dass sie auf dem Führungsflächenabschnitt (58) abwälzt.

8. Förderer nach einem der vorstehenden Ansprüche,
**dadurch gekennzeichnet, dass** der Werkstückträger (50) vier Eckabschnitte (51 a; 51b; 51c; 51d) aufweist, welche die Ecken eines gedachten Rechtecks (52) definieren, wobei sich der Werkstückträger (50) im Höhenbereich der Innen- und der Außenführung (30; 40) nicht über das gedachte Rechteck (52) hinaus erstreckt.

9. Förderer nach Anspruch 8,
**dadurch gekennzeichnet, dass** die vier Eckabschnitte (51a; 51b; 51c; 51d) als drehbare Führungsrollen (64) ausgeführt sind.

10. Förderer nach Anspruch **9**,
**dadurch gekennzeichnet, dass** der Werkstückträger (50) einen Grundkörper (65) aufweist, wobei die Führungsrollen (64) in einer Ausnehmung (66) des Grundkörpers (65) aufgenommen sind.

11. Förderer nach einem der vorstehenden Ansprüche,
**dadurch gekennzeichnet, dass** der gebogene Außenführungsabschnitt (43) und der gebogene Innenführungsabschnitt (35) kreisförmig mit dem gleichen Kreismittelpunkt gebogen sind.

12. Förderer nach einem der vorstehenden Ansprüche,
**dadurch gekennzeichnet, dass** der gebogene Innenführungsabschnitt (35) an einem gesonderten plattenartigen Innenführungsteil (80) ausgebildet ist, wobei eine Haltebaugruppe (81) vorgesehen ist, an der das Innenführungsteil (80) in unterschiedlichen Radialpositionen bezüglich des gebogenen Außenführungsabschnitts (43) befestigbar ist.

13. Förderer nach Anspruch **12**,
**dadurch gekennzeichnet, dass** ein drehbarer Weichenarm (90) vorgesehen ist, dessen Drehachse (91) senkrecht zur Förderebene ausgerichtet und außerhalb der Förderbahn (15) angeordnet ist, wobei der Weichenarm (90) den gebogenen AuBenführungsabschnitt (35) bildet, wobei der Weichenarm (90) in eine Stellung gedreht werden kann, in der sein der Drehachse (91) abgewandtes Ende (92) in eine Halteausnehmung der Haltbaugruppe (81) eingreift, in der das Innenführungsteil (80) angeordnet ist.

14. Werkstückträger (50) für einen Förderer (10) gemäß einem der vorstehenden Ansprüche, wobei
der Werkstückträger (50) vier Eckabschnitte (5 1 a; 51b; 51c; 51d) mit drehbaren Führungsrollen (64) aufweist, welche die Ecken eines gedachten Rechtecks (52) definieren, wobei sich der Werkstückträger (50) im Höhenbereich der Führungsrollen (64) nicht über das gedachte Rechteck (52) hinaus erstreckt, **dadurch gekennzeichnet, dass** zwischen wenigstens zwei Führungsrollen (54) eine wellenartige Seitenfläche (55) mit einem Wellenberg (60) und zwei angrenzenden Wellentälern (61; 62) vorgesehen ist und vorzugsweise mit den kennzeichnenden Merkmalen des Anspruchs 10.

## Claims

1. Conveyor (10) having at least one workpiece carrier (50), wherein a drive means (13) is provided for the workpiece carrier (50), said drive means (13) defining a conveying plane, wherein an inner guide (30) and an outer guide (40) are provided, said guides defining a conveying path (15) for the workpiece carrier (50),
wherein the outer guide (40) comprises a first straight outer-guide section (41), a concavely curved outer-guide section (43) as seen from the conveying path (15), and a second straight outer-guide section (42), said sections being arranged in succession so that they can guide the workpiece carrier (50) without interruption,
wherein the inner guide (30) has a first and a second straight inner-guide section (31; 32), said sections each being arranged in a manner spaced apart by a predetermined path width (16) from and parallel to the first and the second straight outer-guide sections (41; 42),
wherein the inner guide (30) further has a convexly curved inner-guide section (35) as seen from the conveying path (15), said convexly curved inner-guide section being assigned to the curved outer-guide section (43), wherein the radius of curvature (38) of the curved inner-guide section (35) is less than 50% of the path width (16) and preferably less than 20% of the path width (16),
wherein the convexly curved inner-guide portion (35) is arranged in a manner offset radially inwards with regard to the curved outer-guide section (43), compared with an imaginary tangential course (39) with respect to the first and the second straight inner-guide section (31; 32),
**characterized in that** a yielding recess (57) is provided on an inner lateral surface (55), facing the inner guide (30), of the workpiece carrier (50), said yielding recess being formed by a first corrugation trough of the generally corrugated inner lateral surface so that the movement of the workpiece carrier (50) cannot be blocked by the end (33) of the first straight inner-guide section (31).

2. Conveyor according to Claim 1,
**characterized in that** the first and/or the second straight inner-guide section (31; 32) has/have an end (33; 34), wherein the inner guide (30) is configured in the region (37) between said end (33; 34) and the convexly curved inner-guide section (35) such that contact between the inner guide (30) and the workpiece carrier (50) is ruled out.

3. Conveyor according to either of the preceding claims,
**characterized in that** the end (34) of the second straight inner-guide section (32) is arranged such that a guide-surface section (58) of the inner lateral surface (55) of the workpiece carrier (50) is in guiding engagement with said end (34) of the second straight inner-guide section (32).

4. Conveyor according to Claim 3,
**characterized in that** the inner lateral surface (55) of the workpiece carrier (50) has an uninterrupted, kink-free shape.

5. Conveyor according to Claim 4,
**characterized in that** the inner lateral surface (55) of the workpiece carrier (50) is configured in a corrugated manner with a corrugation peak (60), a first corrugation trough (61), which corresponds to the yielding recess (57), and a second corrugation trough (62), which corresponds to the guide-surface section (58), wherein the corrugation peak (60) is arranged such that it can pass into guiding engagement with the curved inner-guide section (35).

6. Conveyor according to one of the preceding claims,
**characterized in that** the spacing (37) of the ends (33; 34) of the first and second straight inner-guide sections (31; 32) from the curved inner-guide section (35) is substantially the same.

7. Conveyor according to one of Claims 3 to 6,
**characterized in that** at the end (33; 34) of the first and/or second straight inner-guide section (31; 32) there is provided a rotatable directing roller which can pass into guiding engagement with the workpiece carrier (50) such that it rolls on the guide-surface section (58).

8. Conveyor according to one of the preceding claims,
**characterized in that** the workpiece carrier (50) has four corner sections (51a; 51b; 51c; 51d) which define the corners of an imaginary rectangle (52), wherein the workpiece carrier (50) does not extend beyond the imaginary rectangle (52) at the height of the inner and outer guides (30; 40).

9. Conveyor according to Claim 8,
**characterized in that** the four corner sections (51a; 51b; 51c; 51d) are configured as rotatable guide rollers (64).

10. Conveyor according to Claim 9,
**characterized in that** the workpiece carrier (50) has a basic body (65), wherein the guide rollers (64) are accommodated in a recess (66) in the basic body (65).

11. Conveyor according to one of the preceding claims,
**characterized in that** the curved outer-guide section (43) and the curved inner-guide section (35) are curved in a circular manner with the same circle centre point.

12. Conveyor according to one of the preceding claims,
**characterized in that** the curved inner-guide section (35) is formed on a separate plate-like inner-guide part (80), wherein a retaining subassembly (81) is provided, it being possible to fasten the inner-guide part (80) to said retaining subassembly at different radial positions with regard to the curved outer-guide section (43).

13. Conveyor according to Claim 12,
**characterized by** the provision of a rotatable diverting arm (90), the rotational axis (91) of which is oriented perpendicularly to the conveying plane and is arranged outside the conveying path (15), wherein the diverting arm (90) forms the curved outer-guide section (35), wherein the diverting arm (90) can be rotated into a position in which its end (92) remote from the rotational axis (91) engages in a retaining recess in the retaining subassembly (81), in which the inner-guide part (80) is arranged.

14. Workpiece carrier (50) for a conveyor (10) according to one of the preceding claims, wherein
the workpiece carrier (50) has four corner sections (51a; 51b; 51c; 51d) having rotatable guide rollers (64), which define the corners of an imaginary rectangle (52), wherein the workpiece carrier (50) does not extend beyond the imaginary rectangle (52) at the height of the guide rollers (64), **characterized in that** between at least two guide rollers (64) there is provided a corrugated lateral surface (55) having a corrugation peak (60) and two adjacent corrugation troughs (61; 62), and preferably having the characterizing features of Claim 10.

## Revendications

1. Transporteur (10) comportant au moins un support de pièce (50), dans lequel il est prévu pour le support de pièce (50) un moyen d'entraînement (13), qui définit un plan de transport, dans lequel il est prévu un guide intérieur (30) et un guide extérieur (40), qui définissent une voie de transport (15) pour le support de pièce (50),
dans lequel le guide extérieur (40) comprend une première section de guide extérieur droite (41), une section de guide extérieur courbe (43), de forme concave vue depuis la voie de transport (15), et une deuxième section de guide extérieur droite (42), qui sont disposées l'une après l'autre, de telle manière qu'elles puissent guider le support de pièce (50) sans interruption,
dans lequel le guide intérieur (30) présente une première et une deuxième sections de guide intérieur droites (31; 32), qui sont disposées respectivement avec une largeur de voie prédéterminée (16) parallèlement à distance de la première et de la deuxième sections de guide extérieur droites (41; 42),
dans lequel le guide intérieur (30) présente en outre une section de guide intérieur courbe (35), de forme convexe vue depuis la voie de transport (15), qui est associée à la section de guide extérieur courbe (43), dans lequel le rayon de courbure (38) de la section de guide intérieur courbe (35) est plus petit que 50 % de la largeur de voie (16) et est de préférence plus petit que 20 % de la largeur de voie (16),
dans lequel la section de guide intérieur courbe convexe (35) est disposée de façon décalée radialement vers l'intérieur par rapport à la section de guide extérieur courbe (43), par rapport à un tracé tangentiel imaginaire (39) à la première et à la deuxième sections de guide intérieur droites (31; 32),
**caractérisé en ce qu'**il est prévu sur une face latérale intérieure (55) du support d'outil (50), qui est tournée vers le guide intérieur (30), un évidement d'évitement (57), qui est formé par une première vallée d'ondulation de la face latérale intérieure globalement de forme ondulée, de telle manière que le mouvement du support de pièce (50) ne puisse pas être bloqué par l'extrémité (33) de la première section de guide intérieur droite (31).

2. Transporteur selon la revendication 1,
**caractérisé en ce que** la première et/ou la deuxième section(s) de guide intérieur droite(s) (31; 32) présente(nt) une extrémité (33; 34), dans lequel le guide intérieur (30) est réalisé dans la région (37), entre ladite extrémité (33; 34) et la section de guide intérieur courbe convexe (35), de telle manière qu'un contact entre le guide intérieur (30) et le support de pièce (50) soit exclu.

3. Transporteur selon l'une quelconque des revendications précédentes,
**caractérisé en ce que** l'extrémité (34) de la deuxième section de guide intérieur droite (32) est disposée de telle manière qu'une section de face de guidage (58) de la face latérale intérieure (55) du support de pièce (50) puisse venir en engagement de guidage avec ladite extrémité (34) de la deuxième section de guide intérieur droite (32).

4. Transporteur selon la revendication 3,
**caractérisé en ce que** la face latérale intérieure (55) du support de pièce (50) présente une forme ininterrompue sans brisure.

5. Transporteur selon la revendication 4,
**caractérisé en ce que** la face latérale intérieure (55) du support de pièce (50) est réalisée sous forme ondulée avec une crête d'ondulation (60), une première vallée d'ondulation (61), qui correspond à l'évidement d'évitement (57), et une deuxième vallée d'ondulation (62), qui correspond à la section de face de guidage (58), dans lequel la crête d'ondulation (60) est disposée de telle manière qu'elle puisse venir en engagement de guidage avec la section de guide intérieur courbe (35).

6. Transporteur selon l'une quelconque des revendications précédentes,
**caractérisé en ce que** la distance (37) entre les extrémités (33; 34) de la première et de la deuxième sections de guide intérieur droites (31; 32) et la section de guide intérieur courbe (35) est essentiellement égale.

7. Transporteur selon l'une quelconque des revendications 3 à 6,
**caractérisé en ce qu'**il est prévu sur l'extrémité (33; 34) de la première et/ou de la deuxième section(s) de guide intérieur droite(s) (31; 32) un rouleau de guidage rotatif qui peut venir en engagement de guidage avec le support de pièce (50) de telle manière qu'il roule sur la section de face de guidage (58).

8. Transporteur selon l'une quelconque des revendications précédentes,
**caractérisé en ce que** le support de pièce (50) présente quatre sections de coin (51a; 51b; 51c, 51d), qui définissent les coins d'un rectangle imaginaire (52), dans lequel le support de pièce (50) ne s'étend pas au-delà du rectangle imaginaire (52) dans la région en hauteur du guide intérieur et du guide extérieur (30; 40).

9. Transporteur selon la revendication 8,
**caractérisé en ce que** les quatre sections de coin (51a; 51b; 51c; 51d) sont réalisées sous la forme de rouleaux de guidage rotatifs (64).

10. Transporteur selon la revendication 9,
**caractérisé en ce que** le support de pièce (50) présente un corps de base (65), dans lequel les rouleaux de guidage (64) sont logés dans un évidement (66) du corps de base (65).

11. Transporteur selon l'une quelconque des revendications précédentes,
**caractérisé en ce que** la section de guide extérieur courbe (43) et la section de guide intérieur courbe (35) sont courbées en arc de cercle avec le même point central.

12. Transporteur selon l'une quelconque des revendications précédentes,
**caractérisé en ce que** la section de guide intérieur courbe (35) est formée sur une partie de guide intérieur (80) séparée en forme de plaque, dans lequel il est prévu un groupe de retenue (81) sur lequel la partie de guide intérieur (80) peut être fixée dans différentes positions radiales par rapport à la section de guide extérieur courbe (43).

13. Transporteur selon la revendication 12,
**caractérisé en ce qu'**il est prévu un bras d'aiguillage rotatif (90), dont l'axe de rotation (91) est orienté perpendiculairement au plan de transport et est disposé à l'extérieur de la voie de transport (15), dans lequel le bras d'aiguillage (90) forme la section de guide extérieur courbe (35), dans lequel le bras d'aiguillage (90) peut être tourné dans une position dans laquelle son extrémité (92) opposée à l'axe de rotation (91) s'engage dans un évidement de retenue du groupe de retenue (81), dans lequel la partie de guide intérieur (80) est disposée.

14. Support de pièce (50) pour un transporteur (10) selon l'une quelconque des revendications précédentes,
dans lequel le support de pièce (50) présente quatre sections de coin (51a; 51b; 51c; 51d) avec des rouleaux de guidage rotatifs (64), qui définissent les coins d'un rectangle imaginaire (52), dans lequel le support de pièce (50) ne s'étend pas au-delà du rectangle imaginaire (52) dans la région en hauteur des rouleaux de guidage (64),
**caractérisé en ce qu'**il est prévu entre au moins deux rouleaux de guidage (64) une face latérale de forme ondulée (55) avec une crête d'ondulation (60) et deux vallées d'ondulation (61; 62) et de préférence avec les caractéristiques caractérisantes de la revendication 10.
